# EUROPEAN PATENT APPLICATION

(11) **EP 4 253 160 A1**
(43) Date of publication of application: **04.10.2023**
(21) Application number: 21897728.8
(22) Date of filing: 11.11.2021
(51) Int. Cl.: B60R 16/02, B63H 21/20, B63H 21/21

(54) **DISPLAY DEVICE AND SHIP**

(30) Priority: 27.11.2020 JP 2020197469
(71) Applicant: Yanmar Holdings Co., Ltd., Osaka-shi, Osaka 530-0013 (JP)
(72) Inventor: NAEGA, Toshiaki, Kunisaki-City, Oita 8730421 (JP); CHIDA, Ryohei, Kunisaki-City, Oita 8730421 (JP); IRISHIKA, Ryota, Osaka-shi, Osaka 530-0013 (JP)
(74) Representative: Dennemeyer & Associates S.A.
(86) International application number: PCT/JP2021/041562
(87) International publication number: WO 2022/113754

(57) **Abstract**

Provided is an exemplary display device for displaying an operating state of a hybrid system that drives a propulsion machine which propels a ship, wherein a display screen for displaying the operating state includes symbols that represent constituent elements constituting the hybrid system, and linear sections that connect the plurality of symbols and change an illumination state according to an operating mode of the hybrid system.

## Description

### TECHNICAL FIELD

The present invention relates to a ship-dedicated display device.

### BACKGROUND ART

Conventionally, a ship-dedicated hybrid system provided with a motor other than an engine as a power source of a ship is known (see, for example, Patent Literature 1). Operating state of the ship-dedicated hybrid system includes, for example, a status in which a propelling machine of the ship is driven by one or both of the engine and the motor, a status in which the the engine causes the motor to generate electricity, and a status in which the motor regenerates a kinetic energy of the ship.

### CITATION LIST

### Patent Literature

Patent Literature 1: Japanese Patent No. 3708925

### DISCLOSURE OF INVENTION

### PROBLEMS TO BE SOLVED BY THE INVENTION

For the ship provided with the hybrid system, it is not easy to grasp an operating state, such as that an energy flow variously changes depending on the operating state of the hybrid system.

It is an object of the present invention to provide a technology that enables a crew, in a ship provided with a hybrid system, to easily grasp an operating state of a hybrid system.

### MEANS FOR SOLVING THE PROBLEMS

An exemplary display device according to the present invention is a display device for displaying an operating state of a hybrid system that drives a propelling machine which propels a ship, a display screen for displaying the operating state including: a symbol that represents a constituent element included in the hybrid system; and a linear section that connects between a plurality of the symbols, and that, according to an operating mode of the hybrid system, changes an illumination state.

### EFFECT OF THE INVENTION

According to a display device of the present invention, a crew, in a ship provided with a hybrid system, can easily grasp an operating state of a hybrid system.

### BRIEF DESCRIPTION OF DRAWINGS

FIG. 1 is a schematic view of a ship-dedicated hybrid system.
FIG. 2 is a block diagram showing an electrical configuration of the ship-dedicated hybrid system.
FIG. 3 is a front view of a configuration of a display device.
FIG. 4 is a schematic view of a configuration of an aggregate screen that aggregates and displays an operating state.
FIG. 5A is a diagram for illustrating a mode transition-underway icon.
FIG. 5B is a diagram for illustrating the mode transition-underway icon.
FIG. 6A is a schematic view of the aggregate screen seen when "ENG Mode" is selected.
FIG. 6B is a schematic view of the aggregate screen in the case of "ENG_N Mode.
FIG. 7A is a schematic view of the aggregate screen seen when "MOT Mode" is selected.
FIG. 7B is a schematic view of the aggregate screen in the case of "MOT_N Mode.
FIG. 8A is a schematic view of the aggregate screen seen when "HYB Mode" is selected.
FIG. 8B is a schematic view of the aggregate screen seen when "HV_A Mode" is selected.
FIG. 9A is a schematic view of the aggregate screen seen when "HV_G Mode" is selected.
FIG. 9B is a schematic view of the aggregate screen in the case of "HV_GN Mode.
FIG. 10 is an example of a screen seen when a warning occurs to the hybrid system.
FIG. 11 is an example of a screen seen when an error occurs to the hybrid system.
FIG. 12 is a diagram for illustrating a screen switch method employed in the display device.
FIG. 13 is a diagram for illustrating an operating mode display section.
FIG. 14 is a table showing the current operating mode and whether or not each operating mode is selectable for it.
FIG. 15 is a schematic view of the aggregate screen of a modified example.

### DESCRIPTION OF EMBODIMENTS

The following is a detailed description of an exemplary embodiment of the present invention with reference to the drawings.

### <1. Outline of Hybrid System>

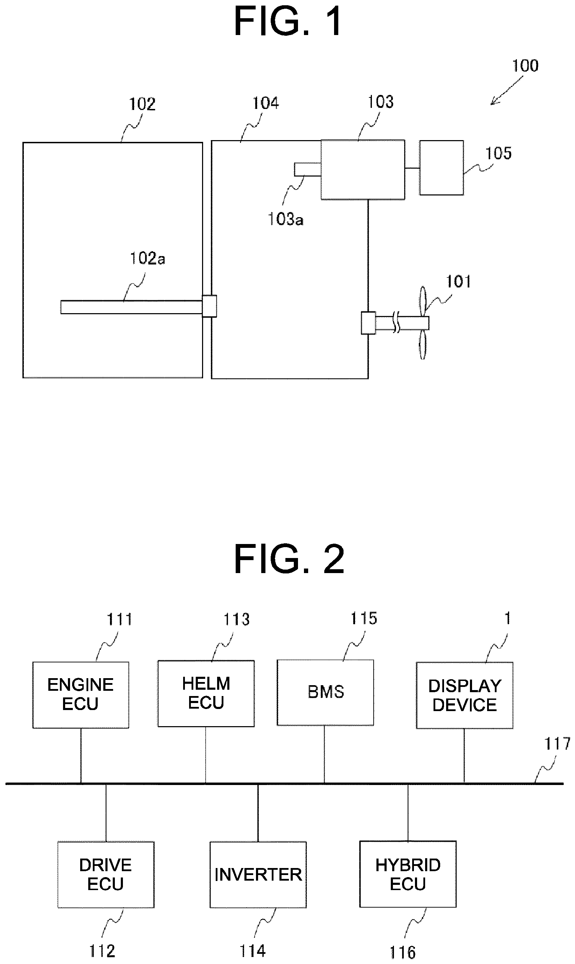

FIG. 1 is a schematic view of a configuration of a ship-dedicated hybrid system 100 according to an embodiment of the present invention. The hybrid system 100 is provided on a ship. The hybrid system 100 drives a propelling machine 101 that propels the ship. In the present embodiment, the propelling machine 101 is a propeller. The hybrid system 100 is provided with an engine 102, a motor 103, and a power transmission device 104. The engine 102 and the motor 103 are drive sources for rotating the propelling machine 101.

Th engine 102 is a known ship-dedicated diesel engine. In the hybrid system 100, the engine 102 serves as a main machine. The engine 102 is provided with a crankshaft 102a that receives a reciprocating motion of an unshown piston and performs a revolution motion. The crankshaft 102a is an output shaft of the engine 102.

The motor 103 is connected to a battery 105. The electric power stored in the battery 105 is supplied to the motor 103, making it possible to rotationally drive a motor output shaft 103a which is an output of the motor 103. Further, rotating the motor output shaft 103a with an outer force causes the motor 103 to function as a generator, making it possible to charge the battery 105.

The power transmission device 104 is provided with a power transmission shaft and clutch which are not shown. Switching the clutch in the power transmission device 104 can switch the power transmission to a plurality of types of statuses. In the present embodiment, switching the clutch of the power transmission device 104 can make a switching among a status in which only a drive force of the engine 102 is transmitted to the propelling machine 101, a status in which only a drive force of the motor 103 is transmitted to the propelling machine 101, a status in which the drive forces of the engine 102 and motor 103 in combination are transmitted to the propelling machine 101. Further, the power transmission device 104, by switching the clutch, can obtain a status in which the power of the engine 102 is transmitted to the motor output shaft 103a.

FIG. 2 is a block diagram showing an electrical configuration of the ship-dedicated hybrid system 100 according to the embodiment of the present invention. As shown in FIG. 2, the hybrid system 100 includes an engine ECU (Electronic Control Unit) 111, a drive ECU 112, a helm ECU 113, an inverter 114, a BMS (Battery Management System) 115, a Hybrid ECU 116, and a display device 1. Each of the above sections 111 to 116 and 1 is connected to a communication bus 117. The communication bus 117 is, for example, a CAN (Controller Area Network) bus.

The engine ECU 111 controls the engine 102. The drive ECU 112 controls the power transmission device 104. The helm ECU 113 manages the user's ship-operation information, such as a shift lever and a throttle lever. The inverter 114 is an inverter for drive control of the motor 103. The BMS 115 manages the battery 105. The BMS 115, for example, monitors the current, voltage, and temperature of the battery 105, and grasps the status of charge (SOC; Status of Charge). The hybrid ECU 116 controls the motor 103 via the inverter 114. The hybrid ECU 116, in cooperation with, for example, the engine ECU 111 and drive ECU 112, executes a control related to switching of the operating mode of the hybrid system 100. As described below, there are a plurality of types of operating modes in the hybrid system 100 of the present embodiment.

The display device 1 displays an operating state of the hybrid system 100. In detail, the display device 1 receives information from each of the sections 111 to 116 through a CAN communication using the CAN bus 117, thereby to display the operating state of the hybrid system 100. Further, the display device 1 allows the user to switch the operating mode.

### <2. Display Device>

### (2-1. Outline of Display Device)

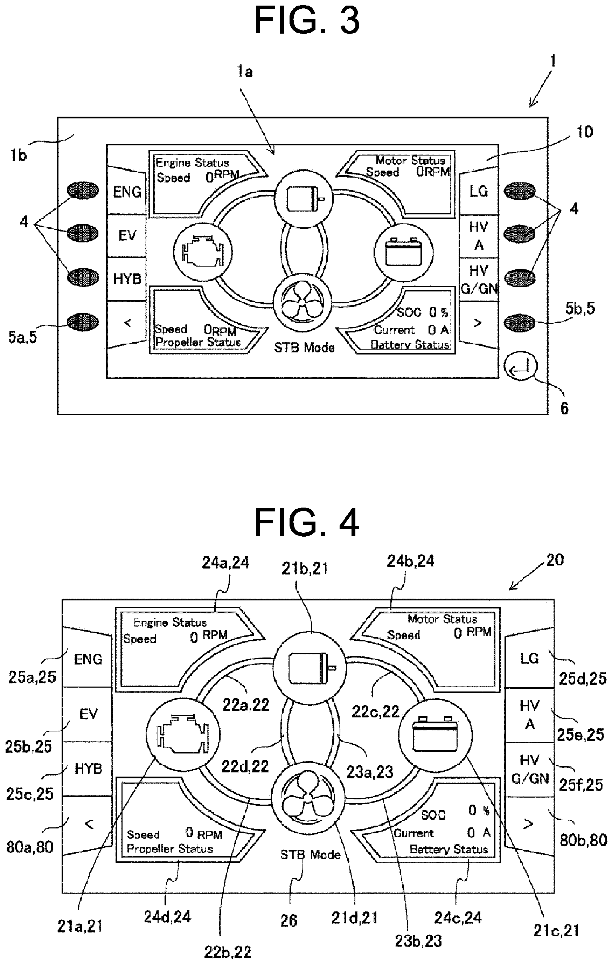

FIG. 3 is a front front view of the configuration of the display device 1 according to the embodiment of the present invention. As shown in FIG. 3, the display device 1 has a display panel 1a and a bezel 1b that covers the outer periphery of the display panel 1a from the front side. The display panel 1a is composed of, for example, a liquid crystal panel or an organic EL panel. The bezel 1b is frame-shaped in plan view from the front. In plan view from the front of the display device 1, the inside of the bezel 1b is a screen area 10 where the image is displayed.

In the present embodiment, the display device 1 is rectangular in plan view from the front. The bezel 1b has a rectangular frame shape in plan view from the front. The screen area 10 is rectangular in shape. Further, these shapes may be changed as needed. For example, the screen area 10 may be circular, oval, etc. Further, the bezel does not have to be frame-shaped. For example, the bezel may be so configured as to be placed only on the right and left of the display panel 1a in plan view from the front of the display device 1.

On the display device 1, a plurality of mode switch buttons 4 for operating mode switching operations are placed around the screen area 10. In detail, the mode switch button 4 is exposed on the front side via an opening provided in the bezel 1b. One of the mode switch buttons 4 is provided for corresponding each of the operating modes. Further, it may be so configured that switching between the operating modes is performed by using a touch screen. In this case, touching a given position in the screen area 10 switches the operating mode.

The screen area 10 displays a screen that displays the operating state. In the present embodiment, there are a plurality of types of screens displaying the operating state, and the plurality of types of screens displaying the operating state are provided in a switchable manner. In detail, the types of screens that is switchable by the display device 1 include an aggregate screen that displays the operating state in aggregate, a data list screen that shows detailed information on the operating state, a warning list screen that shows the content of a warning that is occurring, and an error list screen that shows the content of an error that is occurring. Further, the screen shown in FIG. 3 is the aggregate screen.

That is, in the present embodiment, the display device 1 is so provided as to be switchable to a screen that shows another operating state different from that of the aggregate screen. This makes it possible for a ship crew to obtain a great deal of information on the operating state of the hybrid system 100.

The display device 1 is provided with a screen switch button 5 that allows switching between the plurality of types of screens. The screen switch button 5, like the mode switch button 4, is placed around the screen area 10. Further, it may be so configured that switching among the plurality of types of screens is performed by using the touch screen. In this case, touching the given position in the screen area 10 switches the screen.

Further, the display device 1 is provided with a close button 6. The close button 6, like the mode switch button 4 and the screen switch button 5, is also placed around the screen area 10. Details of the close button 6 are described below.

### (2-2. Aggregate Screen)

FIG. 4 is a schematic view of a configuration of the aggregate screen 20 which displays the operating state in aggregate. In the present embodiment, the aggregate screen 20 is a screen that displays important information to the ship crew, and is a main screen that is mainly used in normal times. The aggregate screen 20 is rectangular in shape with a longer right/left direction than an up/down direction.

As shown in FIG. 4, a display screen 20 (in detail, the aggregate screen 20) that displays the operating state includes a symbol 21 that represents a constituent element included in the hybrid system 100, and a linear section 22 that connects between the plurality of symbols 21, and that, according to the operating mode of the hybrid system 100, changes an illumination state. According to this configuration, the ship crew, by viewing the aggregate screen 20, can easily grasp the current relation of the plurality of constituent elements included in the hybrid system 100. Further, the propelling machine 101 is a constituent element included in the hybrid system 100. Further, there are a plurality of linear sections 22.

In the present embodiment, the plurality of symbols 21 include a symbol 21a representing the engine 102, a symbol 21b representing the motor 103, a symbol 21c representing the battery 105, and a symbol 21d representing the propelling machine 101. According to this, viewing the aggregate screen 20 makes it easy to grasp the current relation of the main constituent elements included in the hybrid system 100.

In the following, the symbol 21a representing the engine 102 may be expressed by an engine symbol 21a, the symbol 21b representing the motor 103 may be expressed by a motor symbol 21b, the symbol 21c representing the battery 105 may be expressed by a battery symbol 21c, and the symbol 21d representing the propelling machine 101 may be expressed by a propelling machine symbol 21d, respectively.

Each of the symbols 21a to 21d may be, for example, a figure, a sign, a letter, a string of letters, a symbol mark, etc. In the present embodiment, each of the symbols 21a to 21d is a figure that combines a symbol mark, which is reminiscent of each constituent element, with a circle surrounding the symbol mark. In detail, the engine symbol 21a is a figure where a symbol mark that is reminiscent of an engine is surrounded by a circle. The motor symbol 21b is a figure where a symbol mark that is reminiscent of a motor is surrounded by a circle. The battery symbol 21c is a figure where a symbol mark that is reminiscent of a battery is surrounded by a circle. The propelling machine symbol 21d is a figure where a symbol mark that is reminiscent of a propeller is surrounded by a circle.

In the present embodiment, each of the four symbols 21a to 21d is placed at the top section of a rhombus and in the center section of the aggregate screen 20. In detail, the engine symbol 21a is placed closer to the left than the center position of the aggregate screen 20. The motor symbol 21b is positioned above the center position of the aggregate screen 20. The battery symbol 21c is placed closer to the right than the center position of the aggregate screen 20. The propelling machine symbol 21d is positioned below the center position of the aggregate screen 20.

The linear section 22 connecting the symbols 21 may include a straight line, a curve, or both the straight line and the curve. In the present embodiment, the linear section 22 includes the curve. In detail, the plurality of linear sections 22 includes a first linear section 22a, a second linear section 22b, a third linear section 22c, and a fourth linear section 22d. The first linear section 22a connects the engine symbol 21a with the motor symbol 21b. The second linear section 22b connects the engine symbol 21a with the propelling machine symbol 21d. The third linear section 22c connects the motor symbol 21b with the battery symbol 21c. The fourth linear section 22d connects the motor symbol 21b with the propelling machine symbol 21d. The first linear section 22a and the second linear section 22b each constitute one circular arc section of a circle passing through the engine symbol 21a, the motor symbol 21b, and the propelling machine symbol 21d. The third and fourth linear sections 22c and 22d each constitute one circular arc section of a circle passing through the motor symbol 21b, the battery symbol 21c, and propelling machine symbol 21d.

Details of the change of the illumination state in the linear section 22 which change accords to the operating mode are described below. In the present embodiment, the aggregate screen 20 includes two additional linear sections 23 that do not change their illumination statuses according to the operating mode of the hybrid system 100. The additional linear sections 23 include a first additional linear section 23a connecting the motor symbol 21b with the propelling machine symbol 21d and a second additional linear section 23b connecting the battery symbol 21c with the propelling machine symbol 21d. The first additional linear section 23a constitutes the circular arc section of the circle same as the circle of the first linear section 22a and second linear section 22b. The second additional linear section 23b constitutes the circular arc section of the circle same as the circle of the third linear section 22c and fourth linear section 22d. Providing the additional linear section 23 improves the design property of the aggregate screen 20.

Further, at least one of the first additional linear section 23a and the second additional linear section 23b may not be provided. Further, for example, the first additional linear section 23a may not be an additional linear section, but may be a linear section that changes its illumination state according to the operating mode of the hybrid system 100.

The aggregate screen 20 further includes status display sections 24 that show the statuses of the constituent elements which correspond to the respective symbols 21a to 21d and which are of the hybrid system 100. This allows the ship crew to know, by the aggregate screen 20, more about details of the statuses of the constituent elements included in the hybrid system 100. In the present embodiment, there are a plurality of status display sections 24, and the plurality of status display sections 24 are placed separately from each other.

In detail, the status display section 24 includes an engine status display section 24a, a motor status display section 24b, a battery status display section 24c, and a propelling machine status display section 24d. The engine status display section 24a shows the status of the engine 102 which is the hybrid system 100's constituent element that corresponds to the engine symbol 21a. The motor status display section 24b shows the status of the motor 103 which is the hybrid system 100's constituent element that corresponds to the motor symbol 21b. The battery status display section 24c shows the status of the battery 105 which is the hybrid system 100's constituent element that corresponds to the battery symbol 21c. The propelling machine status display section 24d shows the status of the propelling machine 101 which is the hybrid system 100's constituent element that corresponds to the propelling machine symbol 21d. The four status display sections 24a to 24d are so placed as to surround the four symbols 21a to 24 which are placed in the center section of the aggregate screen 20.

In detail, the engine status display section 24a has a character section that displays the revolution speed of the engine 102, and a surrounding linear section that surrounds the character section. The engine status display section 24a is placed near the engine symbol 21a. The engine status display section 24a is placed in the upper left section of the aggregate screen 20. Further, the display content of the engine status may include an engine status, other than the engine speed, such as engine temperature, for example.

The motor status display section 24b has a character section that displays the rotation speed of the motor 103, and a surrounding linear section that surrounds the character section. The motor status display section 24b is placed near the motor symbol 21b. The motor status display section 24b is placed in the upper right section of the aggregate screen 20. Further, the display content of the motor status may include a motor status, other than motor speed, such as a motor temperature, for example.

The battery status display section 24c has a character section displaying the current value and SOC of the battery 105, and a surrounding linear section surrounding the character section. The battery status display section 24c is placed near the battery symbol 21c. The battery status display section 24c is placed in the lower right corner of the aggregate screen 20. Further, the display content of the battery status may include a battery status, other than battery current and SOC, such as a battery voltage, for example.

The propelling machine status display section 24d has a character section that displays the rotation speed of the propelling machine 101 (propeller), and a surrounding linear section that surrounds the character section. The propelling machine status display section 24d is placed near the propelling machine symbol 21d. The propelling machine status display section 24d is placed in the lower left section of the aggregate screen 20. Further, the display content of the propelling machine status may include a propelling machine status other than the propeller rotation speed.

The aggregate screen 20 includes an operating mode display section 25 that displays the plurality of types of operating modes provided for the hybrid system 100. This allows the ship crew to easily select, while viewing the aggregate screen 20, the operating mode to be used in the hybrid system 100.

In the present embodiment, the operating mode display section 25 includes an ENG display 25a showing "ENG Mode", an EV display 25b showing "MOT Mode", an HYB display 25c showing "HYB Mode", an LG display 25d showing "LG Mode", an HV_A display 25e showing "HYB_A Mode", and an HV_G/GN display 25f showing "HYB_G Mode" and "HYB_GN Mode".

Further, the "ENG Mode" is an operating mode for sailing with the engine 102. The "MOT Mode" is an operating mode for sailing with the motor 103. The "HYB Mode" is an operating mode in which the sailing with the engine 102 is assisted by the motor 103. The LG Mode" is an operating mode for charging the battery 105 by using a land-based power source. The "HYB_A Mode" is an operating mode in which the sailing with the engine 102 is assisted by the motor 103 more powerfully than in the "HYB Mode". The HYB_G Mode" and the "HYB_GN Mode" are operating modes in which using the engine 102 while sailing charges the battery 105.

The operating mode display section 25 is placed in the end section of the aggregate screen 20. The plurality of buttons 4, which are provided alongside the operating mode display section 25, and which enable a selection of each of the operating modes, are placed around the aggregate screen 20. According to this, use of the plurality of buttons 4 which are independently provided makes it possible to select the operating mode on the ship that is prone to swing, thus making it possible to reduce the possibility of selecting the wrong operating mode. Further, the plurality of buttons 4 are the plurality of mode switch buttons 4 described above.

Further, in the present embodiment, the operating mode display section 25 is also displayed on a screen other than the aggregate screen 20. The operating mode display section 25 is displayed on all screens. That is, the operating mode display section 25 is also included in the data list screen, the warning list screen, and the error list screen.

In detail, the ENG display 25a, the EV display 25b, and the HYB display 25c which are included in the operating mode display section 25 are placed in the left end section of the aggregate screen 20. In the left end section, the ENG display 25a, the EV display 25b, and the HYB display 25c are lined up in this order from upper to lower. The mode switch buttons 4 are placed to the left of the ENG display 25a, the EV display 25b, and the HYB display 25c, respectively. Pressing the mode switch button 4 placed to the left of the ENG display 25a selects "ENG Mode". Pressing the mode switch button 4 placed to the left of the EV display 25b selects "MOT Mode". Pressing the mode switch button 4 placed to the left of the HYB display 25c selects "HYB Mode".

The LG display 25d, the HV_A display 25e, and the HV_G/GN display 25f which are included in the operating mode display section 25 are placed in the right end section of the aggregate screen 20. In the right end section, the LG display 25d, the HV_A display 25e, and the HV_G/GN display 25f are lined up in this order from upper to lower. The mode switch buttons 4 are placed on the right side of the LG display 25d, the HV_A display 25e, and the HV_G/GN display 25f, respectively. Pressing the mode switch button 4 placed to the right of the LG display 25d selects "LG Mode". Pressing the mode switch button 4 placed to the right of the HV_A display 25e selects "HV_A Mode". Pressing the mode switch button 4 placed to the right of the HV_G/GN display 25f selects "HV_G Mode".

Further, the aggregate screen 20 includes a current operating mode display area 26 that shows the currently selected operating mode. In the present embodiment, the current operating mode display area 26 is placed between the battery status display section 24c and the propelling machine status display section 24d in the right/left direction, and below the propelling machine symbol 21d. Further, FIG. 4 shows a status in which none of the operating modes displayed in the operating mode display section 25 is selected, and "STB Mode" is displayed in the current operating mode display area 26. "STB Mode" is a standby mode that waits for the selection of the operating mode.

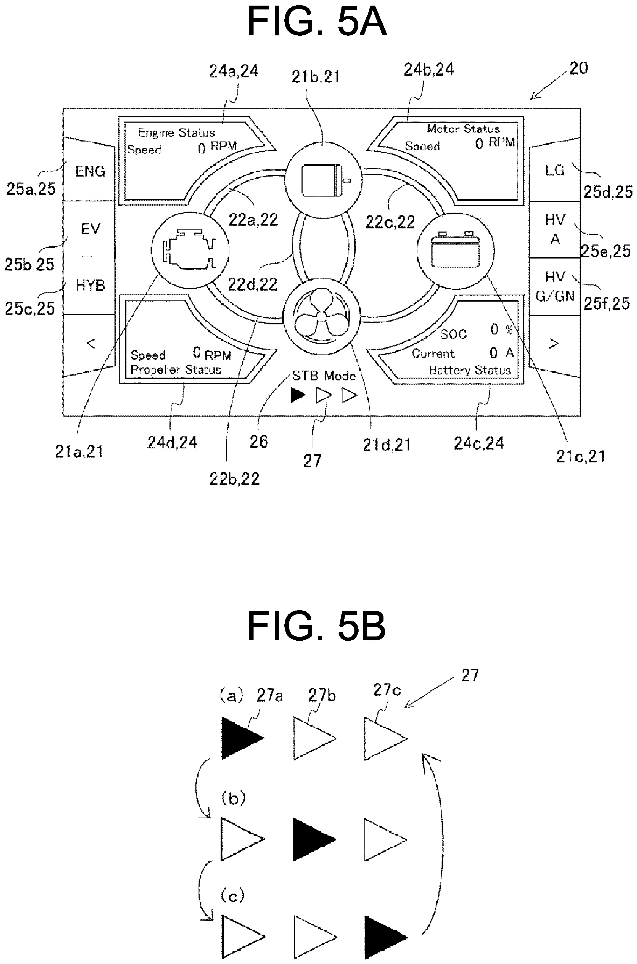

FIGS. 5A and 5B illustrate a mode transition-underway icon 27. As shown in FIG. 5A, during the transition of the operating mode, the mode transition-underway icon 27 is displayed on the lower side of the current operating mode display area 26. This allows the ship crew to easily recognize that the operating mode is in transition.

As shown in FIG. 5B, in detail, the mode transition-underway icon 27 includes three triangular symbols 27a, 27b, and 27c aligned in the right/left direction. During the mode transition, the lighting positions of the symbols 27a to 27c change at a given time interval (e.g., 0.5 second, etc.). The lighting position changes in the order of the first symbol 27a, the second symbol 27b, and the third symbol 27c; after the third symbol 27c is lit, the lighting position returns to the first symbol 27a. This changing of the lighting position is repeated during the mode transition. This allows the ship crew to more easily recognize that the operating mode is in transition.

In the present embodiment, the color of the linear section 22 is different between a first energy flow which shows the flow of an energy for driving the propelling machine 101, and a second energy flow which shows the flow of an energy for charging the battery 105. According to this, the ship crew, by viewing the aggregate screen 20, can immediately recognize the energy flow which accords to the operating mode. In the present embodiment, it is so configured as to display, by color, the difference in the type of an energy flow, but it may also be so configured as to display, by changing the way of lighting (e.g., blinking and non-blinking), the difference in energy flow.

The following exemplifies the aggregate screen 20 in a plurality of operating modes, showing a detailed description of the energy flow display. Further, in the present embodiment, the background of the aggregate screen 20 is black. In the case of no energy flow, the color of the linear section 22 is white. The color of the linear section 22 which shows the first energy flow is green. The color of the linear section 22 which shows the second energy flow is blue.

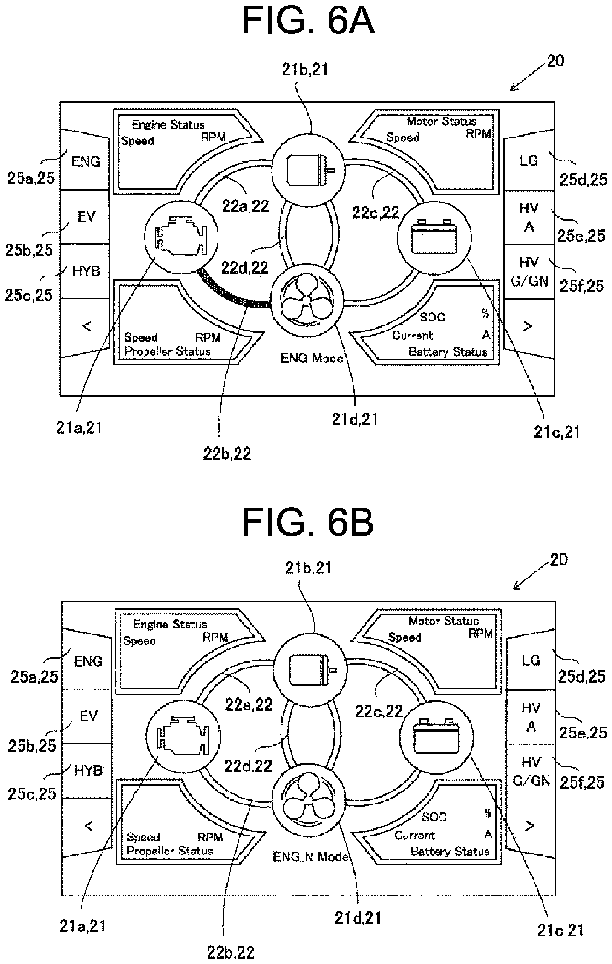

FIG. 6A is a schematic view of the aggregate screen 20 seen when "ENG Mode" is selected. In "ENG Mode", the power of the engine 102 is transmitted to the propelling machine 101. That is, the energy for driving the propelling machine 101 flows from the engine 102 to the propelling machine 101. Thus, on the aggregate screen 20 seen in the case of "ENG Mode", the color of the second linear section 22b connecting the engine symbol 21a with the propelling machine symbol 21d is green. Further, the colors of the first linear section 22a, the third linear section 22c, and the fourth linear section 22d are white.

FIG. 6B is a schematic view of the aggregate screen 20 seen in the case of "ENG_N Mode". "ENG_N Mode" is the operating mode seen when "ENG Mode" is selected in the display device 1 and the shift lever is in neutral. In this case, power is not transmitted to the propelling machine 101 even when the engine 102 is in operation. That is, the energy for driving the propelling machine 101 does not flow from the engine 102 to the propelling machine 101. Thus, on the aggregate screen 20 seen in the case of "ENG_N Mode", the color of the second linear section 22b connecting the engine symbol 21a with the propelling machine symbol 21d, like the color of the other linear sections 22a, 22c and 22d, is white.

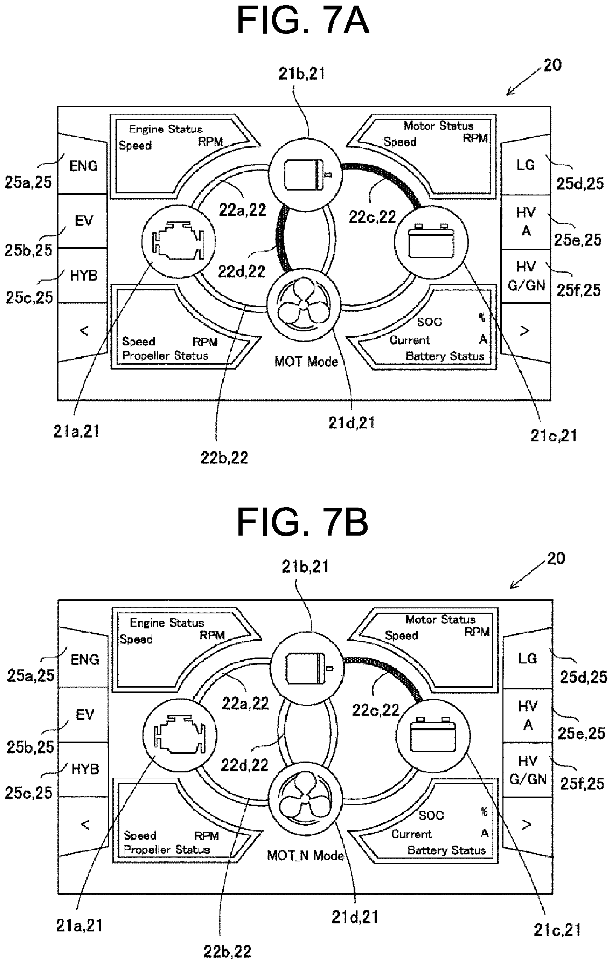

FIG. 7A is a schematic view of the aggregate screen 20 seen when "MOT Mode" is selected. In "MOT Mode", the motor 103 obtains power from the battery 105 thereby to rotate the motor output shaft 103a, transmitting the rotational power of the motor output shaft 103a to the propelling machine 101. That is, the energy for driving the propelling machine 101 flows from the battery 105 to the motor 103, and then flows from the motor 103 to the propelling machine 101. Thus, on the aggregate screen 20 seen in the case of "MOT Mode", the colors of the third linear section 22c connecting the motor symbol 21b with the battery symbol 21c and of the fourth linear section 22d connecting the motor symbol 21a with the propelling machine symbol 21d are green. Further, the colors of the first linear section 22a and second linear section 22b are white.

FIG. 7B is a schematic view of the aggregate screen 20 seen in the case of "MOT_N Mode". "MOT_N Mode" is the operating mode seen when "MOT Mode" is selected on the display device 1 and the shift lever is in neutral. In this case, power is not transmitted to the propelling machine 101 even when the motor 103 is powered by the battery 105 and is in operation. That is, the energy for driving the propelling machine 101 does not flow from the motor 103 to the propelling machine 101. Thus, on the aggregate screen 20 seen in the case of "MOT_N Mode", only the color of the third linear section 22c connecting the motor symbol 21b with the battery symbol 21c is green, while the colors of the other linear sections 22a, 22b and 22d are white.

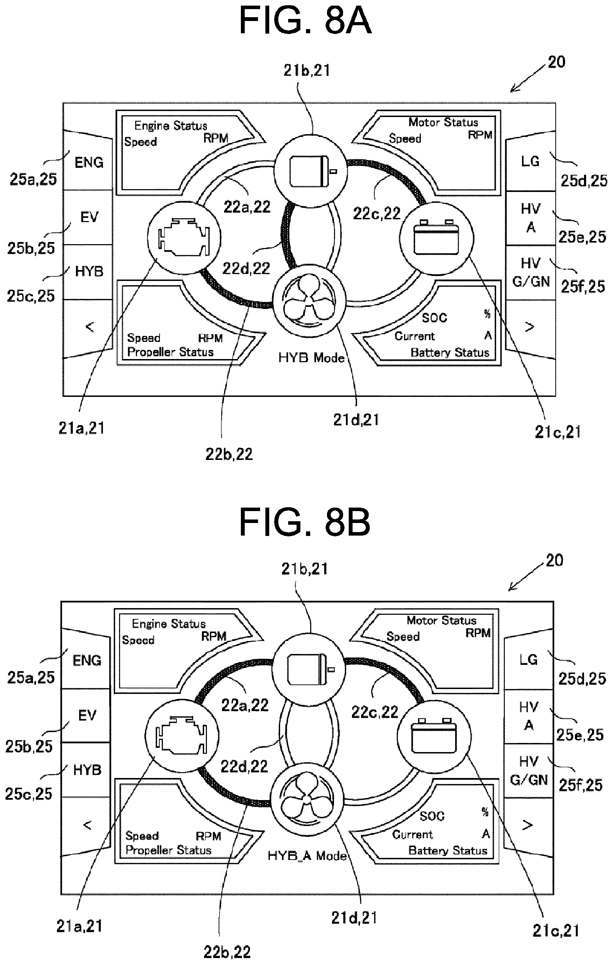

FIG. 8A is a schematic view of the aggregate screen 20 seen when "HYB Mode" is selected. In "HYB Mode", the power of the engine 102, in combination with the power of the motor 103, is transmitted to the propelling machine 101. Further, power for driving the motor 103 is supplied from the battery 105 to the motor 103. That is, the energy for driving the propelling machine 101 flows from the engine 102 to the propelling machine 101, and flows from the battery 105 via the motor 103 to the propelling machine 101. Thus, on the aggregate screen 20 seen in the case of "HYB Mode", the colors of the second linear section 22b connecting the engine symbol 21a with the propelling machine symbol 21d, of the third linear section 22c connecting the motor symbol 21b with the battery symbol 21c, and of the fourth linear section 22d connecting the motor symbol 21a with the propelling machine symbol 21d are green. Further, the color of the first linear section 22a is white.

When "HYB Mode" is selected and the shift lever is in neutral, "HYB _NMode" is made. In this case, no power is transmitted from the engine 102 and the motor 103 to the propelling machine 101. However, the battery 105 supplies power to the motor 103. Thus, the aggregate screen 20 in the cases of "HYB_NMode" displays the same energy flow as the aggregate screen 20 of "MOT_N Mode" shown in FIG. 7B. That is, on the aggregate screen 20 seen in the case of "HYB_NMode", the color of only the third linear section 22c connecting the motor symbol 21b with the battery symbol 21c is green, while the colors of the other linear sections 22a, 22b and 22d are white.

FIG. 8B is a schematic view of the aggregate screen 20 seen when "HV_A Mode" is selected. In "HV_A Mode", the motor 103 assists the engine 102, rotating the propelling machine 101. Thus, on the aggregate screen 20 seen in the case of "HV_A Mode", the colors of the first linear section 22a connecting the engine symbol 21a with the motor symbol 21b, of the second linear section 22b connecting the engine symbol 21a with the propelling machine symbol 21d, and of the third linear section 22c connecting the motor symbol 21b with the battery symbol 21c are green. Further, the color of the fourth linear section 22d is white.

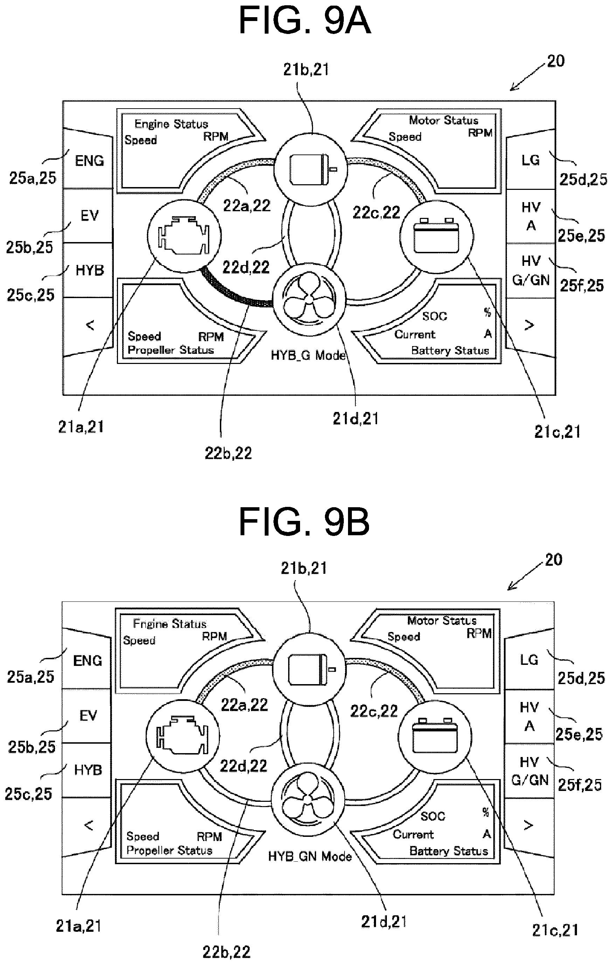

FIG. 9A is a schematic view of the aggregate screen 20 seen when "HV_G Mode" is selected. In "HV_G Mode", the power of the engine 102 is transmitted to the propelling machine 101. Further, the power of engine 102 rotates the motor output shaft 103a of the motor 103, charging, to the battery 105, the electric power generated by the motor 103. That is, the energy for driving the propelling machine 101 flows from the engine 102 to the propelling machine 101. Further, the energy for charging the battery 105 flows from the engine 102 via the motor 103 to the battery 105. Thus, on the aggregate screen 20 seen in the case of "HV_G Mode", the color of the second linear section 22b connecting the engine symbol 21a with the propelling machine symbol 21d is green. The colors of the first linear section 22a connecting the engine symbol 21a with the motor symbol 21b, and of the third linear section 22c connecting the motor symbol 21b with the battery symbol 21c are blue. Further, the color of the fourth linear section 22d is white.

FIG. 9B is a schematic view of the aggregate screen 20 seen when "HV_GN Mode". "HV_GN Mode" is the operating mode seen when "HV_G Mode" is selected on the display device 1 and the shift lever is in neutral. In this case, power is not transmitted from the engine 102 to the propelling machine 101. Meanwhile, power is transmitted from the engine 102 to the motor 103, charging the battery 105 by the electricity generated by the motor 103. That is, the energy for driving the propelling machine 101 does not flow from the engine 102 and the motor 103 to the propelling machine 101. Energy for charging the battery 105 flows from the engine 102 via the motor 103 to the battery 105. Thus, on the aggregate screen 20 seen in the case of "HV_GN Mode", the color of the second linear section 22b connecting the engine symbol 21a with the propelling machine symbol 21d is white instead of green. Further, the colors of the first linear section 22a connecting the engine symbol 21a with the motor symbol 21b, and of the third linear section 22c connecting the motor symbol 21b with the battery symbol 21c are blue. Further, the color of the fourth linear section 22d is white.

Note that in "LG Mode", there is no energy flow for driving the propelling machine 101. Further, although there is the energy flow for charging the battery 105, it is so configured as to charge the battery 105 from the land-based power source, and the energy flow cannot be expressed by the linear sections 22a to 22d of the aggregate screen 20. Thus, on the aggregate screen 20 seen in the case of "LG Mode", any of the linear sections 22a to 22d is white.

### (2-3. Display about Warning and Error)

It is preferable that the display device 1 is so provided that the aggregate screen 20 is capable of displaying an icon 60 that makes a notification about at least one of the warning and error which are occurring to the hybrid system 100 at present. Creating the above configuration allows the ship crew to quickly recognize the warning or the error occurring to the hybrid system 100. Further, in the present embodiment, the icon 60 is displayed not only on the aggregate screen 20, but also on the data list screen, the warning list screen, and the error list screen.

The warning is issued when the hybrid system 100 is not currently experiencing the error, but may do so in the future. The situation of causing the warning is, for example, when the temperature of the engine 102, the motor, etc. becomes higher than a preset threshold value, or when the SOC of the battery 105 becomes lower than a preset threshold value. Further, the error is issued when at least part of the function of the hybrid system 100 is no longer usable. The error situations include, for example, a failure of various sensors, a failure of the engine 102, a failure of the motor 103, and a failure of the power transmission device 104.

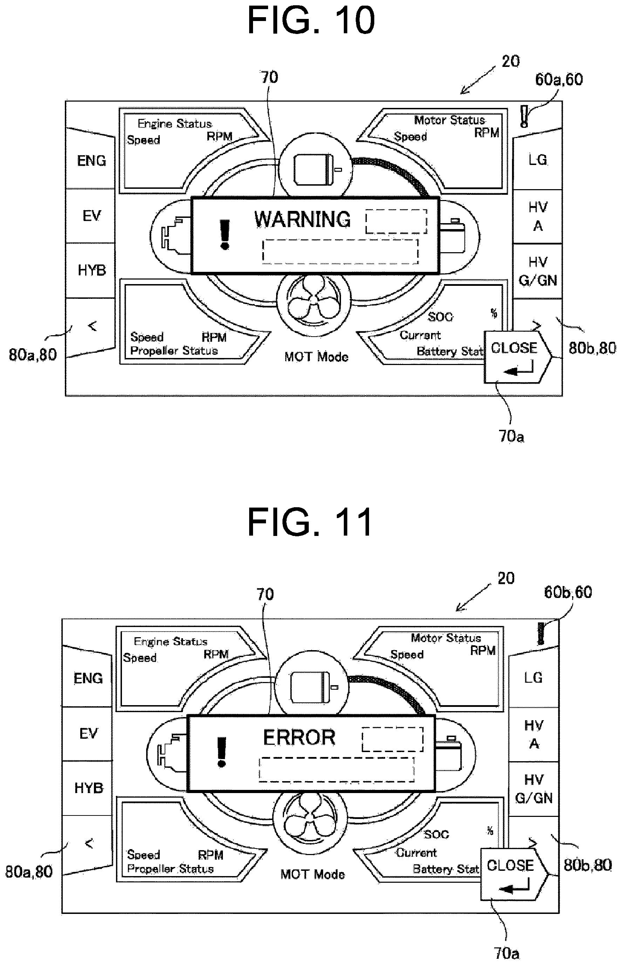

FIG. 10 shows an example of a screen seen when the warning occurs to the hybrid system 100. FIG. 11 shows an example of a screen seen when the error occurs to the hybrid system 100. FIGS. 10 and 11 assume, as examples, that the warning and the error occur when the aggregate screen 20 is displayed.

As shown in FIG. 10, occurrence of the warning displays a warning icon 60a on the upper right of the screen. In detail, the warning icon 60a is displayed above the LG display 25d (see FIG. 4, etc.). The warning icon 60a is a yellow exclamation mark. However, the position, shape and color of the warning icon 60a may be changed as appropriate. The warning icon 60a may be so configured as to blink at a given time interval (e.g., 0.5 second interval). This makes it easier for the ship crew to recognize the occurrence of the warning. The warning icon 60a is always displayed when the situation that should be warned about occurs to the hybrid system 100.

As shown in FIG. 11, occurrence of the error displays an error icon 60b on the upper right of the screen. In detail, the error icon 60b is displayed on the right side of the warning icon 60a. In the present embodiment, the error icon 60b is a red exclamation mark. However, the position, shape and color of the error icon 60b may be changed as appropriate. The error icon 60b may be so configured as to blink at a given time interval in the same manner as the warning icon 60a. This makes it easier for the ship crew to recognize the occurrence of the error. The error icon 60b is always displayed when the error situation occurs to the hybrid system 100. When the warning and the error are occurring, both the warning icon 60a and the error icon 60b are displayed on the screen.

Further, as shown in FIGS. 10 and 11, occurrence of the warning and error occur displays a pop-up type display screen 70 to notify the user of the occurrence of the warning and error. The pop-up type display screen 70 includes, for example, a text that notifies the user of the warning or error, a code number of the warning or error, and a text that briefly notifies the user of the content of the warning or error. In the present embodiment, the pop-up type display screen 70 also displays a figure 70a showing the position of the close button 6 (see FIG. 3). The pop-up type display screen 70 is displayed only when the warning or error is resolved, or when the close button 6 is pressed down.

Further, when it is necessary to simultaneously display the pop-up type screen 70 that notifies the user of the warning and the pop-up type screen 70 that notifies the user of the error, the pop-up type screen 70 that notifies the user of the error is first displayed. Further, the pop-up type screen 70 is not limited to when the aggregate screen 20 is displayed, but also when the data list screen, the warning list screen, and the error list screen are displayed.

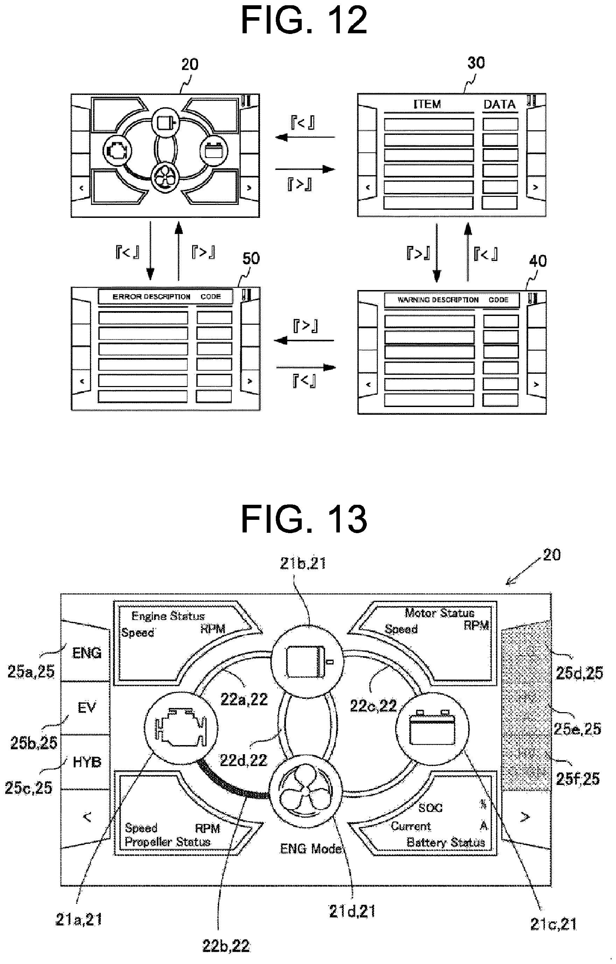

Occurrence of the warning adds the content of the occurring warning to the warning list screen. Further, occurrence of the error occurs adds the content of the occurring error to the error list screen. The occurring warning and error can be checked on the warning list screen and the error list screen. Switching the screen can be performed using the screen switch button 5 as described above. FIG. 12 illustrates a screen switch method employed in the display device 1.

In the present embodiment, all screens display a screen feed direction display section 80 (see FIG. 11, etc.) which shows the screen feed direction. The screen feed direction display section 80 is provided below the operating mode display section 25 (see FIG. 4, etc.). The screen feed direction display section 80 includes a forward feed display 80a and a reverse feed display 80b. A forward feed button 5a (see FIG. 3) is placed to the left of the forward feed display 80a. A reverse feed button 5b (see FIG. 3) is placed to the right of the reverse feed display 80b.

Continuously pressing the forward feed button 5a changes the screen in the leftward (counterclockwise) direction in FIG. 12. For example, when the first screen is the aggregate screen 20, continuously pressing the forward feed button 5a switches the screen from the aggregate screen 20 to the error list screen 50, the warning list screen 40, the data list screen 30, and back to the aggregate screen 20. Continuously pressing the reverse feed button 5b switches the screen in the rightward (clockwise) direction FIG. 12. For example, when the first screen is the aggregate screen 20, continuously pressing the reverse feed button 5b switches the screen from the aggregate screen 20 to the data list screen 30, the warning list screen 40, the error list screen 50, and back to the aggregate screen 20. Further, for example, when the screen is the aggregate screen 20, pressing the forward feed button 5a and then pressing the reverse feed button 5b returns the screen to the aggregate screen 20 after once becoming the error list screen 50.

In the present example, it is assumed that the data list screen 30, the warning list screen 40, and the error list screen 50 are each one page, but they may be a plurality of pages depending on the information amount displayed in the list. For example, assume that the data list screen 30 has three pages. In this case, continuously pressing the reverse feed button 5b from the aggregate screen 20 changes the screen in this order: page 1 of the data list screen 30, page 2 of the data list screen 30, page 3 of the data list screen 30, the warning list screen 40, and the error list screen 50, and then return to the aggregate screen 20.

### (2-4. Details of Operating Mode Display Section)

The operating mode display section 25 displays, in a distinguishable manner, the operating mode that is selectable at present, and the operating mode that is unselectable at present. According to this configuration, the ship crew can easily recognize the operating mode that is selectable at present.

FIG. 13 illustrates the operating mode display section 25. FIG. 13 shows the aggregate screen 20 seen when the operating mode is "ENG Mode". In the example shown in FIG. 13, the operating modes selectable at present are "ENG Mode", "EV Mode", and "HYB Mode", and the operating modes unselectable at present are "LG Mode", "HV_A Mode", "HV_G Mode", and "HV_GN Mode". The LG display 25d, the HV_A display 25e, and the HV_G/GN display 25f, which display the unselectable operating modes, are grayed out, making it possible to make a distinction between the selectable operating mode (not grayed out) and the unselectable operating mode.

Further, the reason why "ENG Mode" is selectable when the current operating mode is "ENG Mode" in the present example is to enable deselection (stop) of "ENG Mode". Further, in the example shown in FIG. 13, using the gray-out display makes it possible to make the distinction between the selectable operating mode and the unselectable operating mode, but another configuration may be used as long as the two can be distinguished. For example, the operating mode display section 25 may be so configured as to display, in different colors, the operating mode that is selectable at present and the operating mode that is unselectable at present.

The display device 1 displays the operating mode display section 25 according to an instruction from the hybrid ECU 116, for example (see FIG. 2). In the present example, it is preliminarily determined which selection mode is selectable or not in the case of a certain operating mode, and the display status of the operating mode display section 25 is changed according to the instruction from the hybrid ECU 116 which instruction is in accordance with the above determination. For example, "HV _A Mode" and "HV_G/GN Mode", which are based on the assumption of selecting "HYB Mode", can only be selected when "HYB Mode" is selected at present. In the example shown in FIG. 13, "ENG Mode" is selected at present; thus, "HV _A Mode" and "HV_G/GN Mode" are unselectable, and HV_A Display 25e and HV_G/GN Display 25f are grayed out.

Further, when the error occurs to the constituent element included in the hybrid system 100, for example, the unselectable mode may occur as the case may be. Due to this, it is preferable that the hybrid ECU 116 should be so configured as to notify, when the operating mode becomes unselectable due to the error occurring to the hybrid system 100, the display device 1 of such information. Then, it is preferable that the display device 1 should gray out the display of the operating mode that is unselectable due to the occurrence of the error or the like.

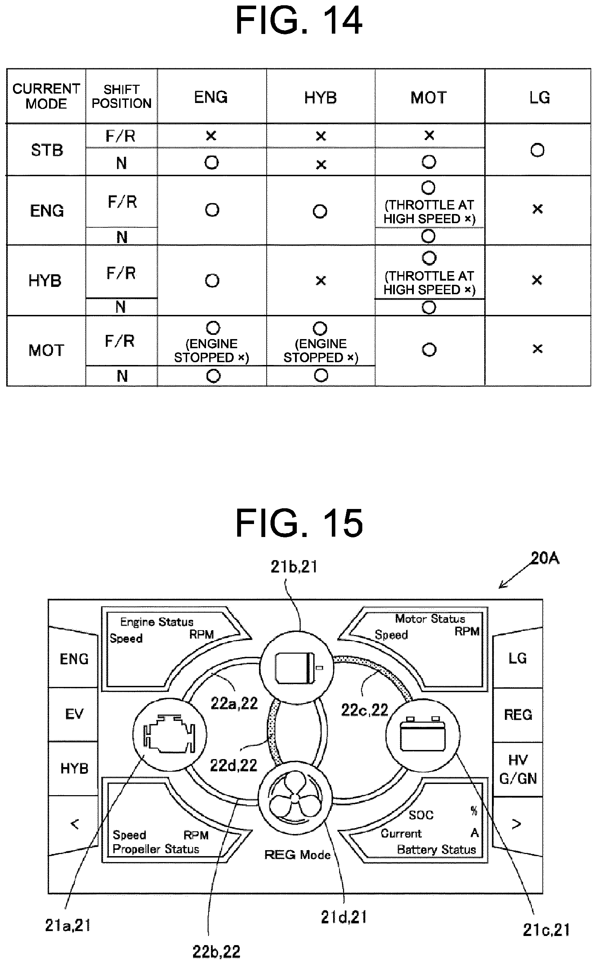

An example of the determination for the selectable operating mode is described using FIG. 14. FIG. 14 is a table showing the current operating mode and whether or not each of the operating modes is selectable for it. In FIG. 14, "∘" shows that the selection is possible, and "×" shows that the selection is not possible (unselectable). The shift position is the position of the shift lever, where "F" for forward, "R" for reverse, and "N" for neutral.

When the current operating mode is "STB Mode" and the shift position is "N", "ENG Mode", "MOT Mode", and "LG Mode" are selectable and "HYB Mode" is unselectable. When the current operating mode is "STB Mode" and the shift position is "F" and "R", none of the operating modes is selectable excluding "LG Mode". Further, it should be noted that in order for "ENG Mode" to be selectable, a preparation of the engine 102 should be completed. In order for "MOT Mode" to be selectable, a preparation related to the motor 103 should be completed. In order for "LG Mode" to be available, a preparation for charging using the land-based power source should be completed. Further, the preparation of the engine 102 and the preparation related to the motor 103 being completed mean that a startup preparation has been completed, bringing about a state that no problem has been identified in the initial check and in confirmation of presence or absence of the error.

When the current operating mode is "ENG Mode"; regardless of which shift position is selected, "ENG Mode", "HYB Mode", and "MOT Mode" are selectable, and "LG Mode" is unselectable. However, in order for "HYB Mode" and "MOT Mode" to be selectable, the preparation related to the motor 103 should be completed. Further, "MOT Mode", when the shift position is "F" and "R", is unselectable if the throttle is at a high speed (above a given threshold value). Further, the 'LG Mode', only when the engine 102 is in the warm-up operation, is selectable based on the assumption that the preparation for the charging using the land-based power source is completed.

When the current operating mode is "HYB Mode"; regardless of which shift position is selected, "ENG Mode" and "MOT Mode" are selectable, and "HYB Mode" and "LG Mode" is unselectable. However, in order for "ENG Mode" to be selectable, the preparation of the engine 102 should be completed. In order for "MOT Mode" to be selectable, a preparation related to the motor 103 should be completed. Further, "MOT Mode", when the shift position is "F" and "R", is unselectable if the throttle is at a high speed.

When the current operating mode is "MOT Mode"; regardless of which shift position is selected, "ENG Mode", "HYB Mode", and "MOT Mode" are selectable, and "LG Mode" is unselectable. However, in order for "ENG Mode" and "HYB Mode" to be selectable, the preparation of the engine 102 should be completed when the shift position is "N", and the engine 102 should not be stopped or the preparation of the engine 102 should be completed when the shift position is "F" and "R".

### <3. Modified Example>

FIG. 15 is a schematic view of an aggregate screen 20A of a modified example. The modified example includes 'REG Mode' in the operating mode. FIG. 15 shows the aggregate screen 20A seen when "REG Mode" is selected. "REG Mode" is a mode in which, when the ship is sailing using its sail, the power of the propelling machine 101 (propeller) is transmitted to the motor 103 thereby to generate electricity, thus charging (regenerative charging) the battery 105.

In "REG Mode", the power of the propelling machine 101 rotates the motor output shaft 103a, charging, to the battery 105, the power generated by the motor 103. That is, the energy for charging the battery 105 flows from the propelling machine 101 via the motor 103 to the battery 105. Thus, on the aggregate screen 20A in the case of "REG Mode", the colors of the fourth linear section 22d connecting the motor symbol 21b with the propelling machine symbol 21d, and of the third linear section 22c connecting the motor symbol 21b with the battery symbol 21c are blue. Further, the colors of the first linear section 22a and second linear section 22b are white.

### <4. Notes, etc.>

The various technical features disclosed in the present specification can be modified in various ways without departing from the gist of the technical creation thereof. Further, the plurality of embodiments and modified examples may be combined with each other within an allowable range.

### DESCRIPTION OF REFERENCE NUMERALS

1: display device
4: mode switch button (button)
20, 20A: aggregate screen
21: symbol
21a: engine symbol
21b: motor symbol
21c: battery symbol
21d: propelling machine symbol
22: linear section
22a: first linear section
22b: second linear section
22c: third linear section
22d: fourth linear section
24: status display section
24a: engine status display section
24b: motor status display section
24c: battery status display section
24d: propelling machine status display section
25: operating mode display section
60: icon
60a: warning icon
60b: error icon
100: hybrid system
101: propelling machine
102: engine
103: motor
105: battery

## Claims

1. A display device for displaying an operating state of a hybrid system that drives a propelling machine which propels a ship comprising, in a display screen for displaying the operating state:
a symbol that represents a constituent element included in the hybrid system; and
a linear section that connects between a plurality of the symbols, and that, according to an operating mode of the hybrid system, changes an illumination state.

2. The display device as claimed in claim 1, wherein the plurality of symbols includes a symbol representing an engine, a symbol representing a motor, a symbol representing a battery, and a symbol representing a propelling machine.

3. The display device as claimed in claim 2, wherein
a color of the linear section is different between a first energy flow which shows a flow of an energy for driving the propelling machine, and a second energy flow which shows a flow of an energy for charging the battery.

4. The display device as claimed in any one of claims 1 to 3, wherein
the display screen further includes a status display section that shows a status of the constituent element of the hybrid system, which corresponds to the symbol.

5. The display device as claimed in any one of claims 1 to 4, wherein
the display screen further includes an operating mode display section that displays a plurality of types of the operating modes provided for the hybrid system.

6. The display device as claimed in claim 5, wherein
the operating mode display section displays, in a distinguishable manner, the operating mode that is selectable at present and the operating mode that is unselectable at present.

7. The display device as claimed in claim 5 or 6, wherein
the operating mode display section is placed in an end section of the display screen, and a plurality of buttons, which are provided alongside the operating mode display section, and which enable a selection of each of the operating modes, are placed around the display screen.

8. The display device as claimed in any one of claims 1 to 7, wherein
the display screen is capable of displaying an icon that makes a notification about at least one of a warning and an error which are occurring to the hybrid system at present.

9. The display device as claimed in any one of claims 1 to 8, wherein
the display device is so provided as to be switchable to a screen that shows an other operating state that is different from the operating state displayed on the display screen.

10. A ship comprising:
the display device as claimed in any one of claims 1 to 9.
